**Europäisches Patentamt**

**European Patent Office**

**Office européen des brevets**

(11) Veröffentlichungsnummer: **0 110 109 B1**

(12) **EUROPÄISCHE PATENTSCHRIFT**

(45) Veröffentlichungstag der Patentschrift:
**14.05.86**

(51) Int. Cl.⁴: **B 60 T 8/18**

(21) Anmeldenummer: **83110549.9**

(22) Anmeldetag: **04.08.83**

(60) Veröffentlichungsnummer der früheren Anmeldung
nach Art. 76 EPÜ: **0101977**

(54) Abwiegevorrichtung zur lastabhängigen Regelung der Bremskraft von Fahrzeugen, insbesondere Schienenfahrzeugen.

(30) Priorität: **05.08.82 DE 3229261**

(43) Veröffentlichungstag der Anmeldung:
**13.06.84 Patentblatt 84/24**

(45) Bekanntmachung des Hinweises auf die Patenterteilung:
**14.05.86 Patentblatt 86/20**

(84) Benannte Vertragsstaaten:
**AT BE CH DE FR GB IT LI LU NL SE**

(56) Entgegenhaltungen:
**DE - B - 1 201 392**
**DE - B - 1 780 045**

(73) Patentinhaber: **Waggonfabrik Talbot, Jülicher Strasse 213-237, D-5100 Aachen (DE)**

(72) Erfinder: **Corsten, Leo, Max-Planck-Strasse 4, D-5120 Herzogenrath (DE)**
Erfinder: **Collienne, Franz-Joseph, Oestrasse 95, B-4700 Eupen (BE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

## Beschreibung

Die Erfindung betrifft eine Abwiegevorrichtung zur lastabhängigen Regelung der Bremskraft von Fahrzeugen, insbesondere Schienenfahrzeugen, die mit der Federung des Fahrzeugs in Wirkverbindung steht, die weiterhin ein sich an einer starren mit dem abzufedernden Fahrzeugteil befestigten Druckplatte des abzufedernden Fahrzeugteils abstützendes, elastisch verformbares Federungsteil aufweist, wobei die abzuwiegende Last zum überwiegenden Teil über die Druckplatte unmittelbar auf das Federungsteil und zu einem geringen Teil mittelbar über ein Wiegeventil übertragen wird, das ebenfalls am abzufedernden Fahrzeugteil bzw. an der Druckplatte befestigt ist und einen Stössel aufweist, der die Druckplatte verschieblich durchgreift und der auf seiner stirnseitigen Wirkfläche mit einer der abzuwiegenden Last in etwa proportionalen Kraft belastet wird.

Insbesondere bei Schienenfahrzeugen ist es bekannt, die Bremskraft in Abhängigkeit von dem jeweiligen Gesamtgewicht des Fahrzeugs, d.h. der jeweiligen Beladung zu verändern. Hierdurch wird erreicht, dass innerhalb eines Zugverbandes befindliche, unterschiedlich beladene Schienenfahrzeuge entsprechend ihrer jeweiligen Zuladung gebremst werden, um einerseits bei leeren oder nur gering beladenen Schienenfahrzeugen Überbremsungen und andererseits bei voll beladenen Schienenfahrzeugen desselben Zugverbandes zu geringe Bremswirkungen zu vermeiden, da in beiden Fällen die Sicherheit nachteilig beeinflusst würde.

Bei den bekannten Konstruktionen (DE-B-1 201 392 und DE-B-1 780 045) zur lastabhängigen Regelung der Bremskraft von Schienenfahrzeugen finden Bremskraftregler mit einem Wiegenventil Anwendung, das ein Druckregelventil zur Steuerung eines dem Fahrzeuggewicht verhältnisgleichen Steuerdruckes in einer an die Bremsvorrichtung angeschlossenen Kammer umfasst. Die Kammer ist zur Steuerung des Druckregelventils durch eine von einem Anteil des jeweiligen Fahrzeuggewichtes belastete Membran verschlossen, wobei zwischen der Wirkfläche eines die Membran einspannenden, mit dem Fahrzeugrahmen in Verbindung stehenden Gehäuseringes und einer mit der Abfederung des Fahrzeuges verbundenen Druckplatte einerseits und zwischen der Druckplatte und der Membran andererseits ein elastisches Bauteil vorgesehen ist.

Bei den aus der DE-B-1 201 392 bekannten Wiegeventilen ist das elastische Bauteil als hydraulische Druckmessdose ausgebildet. An dem vom Gehäusering umgebenen, kreisflächenartigen Oberflächenteil der Druckmessdose liegt hierbei die kleinere Fläche eines als Differentialkolben ausgebildeten Doppelkolbens an, auf dessen grössere Kolbenfläche die Membran mit einer der vom Steuerdruck beaufschlagten Kammer abgewandten Seite aufliegt. Auf diese Weise werden die hohen Kräfte der Druckmessdose untersetzt auf die Membran übertragen. Diese Druckmessdosen der bekannten Wiegeventile erfordern einen relativ grossen konstruktiven Aufwand, um sie mit einer Druckflüssigkeit aufzufüllen und anschliessend zumindest für eine bestimmte störungs- und wartungsfreie Betriebszeit dicht zu halten. Bei den auftretenden hohen Drücken neigt die Druckflüssigkeit dazu, durch die elastischen Wandungen der Druckmessdose zu diffundieren, womit nach einer gewissen Zeit die Wirksamkeit nachlässt. Diese Nachteile vermeidet ein aus der DE-B-1 780 045 bekanntes Wiegeventil, das anstelle einer aufwendigen Druckmessdose einen scheibenartigen Gummikörper aufweist, der nicht nur einfacher und preiswerter, sondern auch betriebssicherer ist. Der elastisch verformbare Gummikörper liegt einerseits auf seiner gesamten Fläche an einer Druckplatte an, die ihrerseits auf der Fahrzeugfederung aufliegt und von dieser gegen den Gummikörper angedrückt wird. Andererseits ist der Gummikörper in einem äusseren Ringbereich gegen eine breite Ringschulter des Ventilgehäuses abgestützt und liegt nur im mittleren Flächenbereich an der stirnseitigen Wirkfläche eines Stössels an, durch den die Membran mit einem Teil des jeweiligen Fahrzeuggewichtes belastet wird. Trotz dieser Verbesserung stellt das bekannte Wiegeventil noch ein verhältnismässig kompliziertes Bauteil dar, welches darüberhinaus einen grösseren Einbauraum benötigt, so dass es nur an bestimmten Stellen zwischen dem Fahrwerk und dem abgefederten Rahmen des Fahrzeuges untergebracht werden kann. Speziell bei Schienenfahrzeugen mit mehrachsigen Drehgestellen, vorzugsweise mit sehr kleinen Laufrädern, ergeben sich Schwierigkeiten für die Unterbringung der bekannten Wiegeventile.

Der Erfindung liegt die Aufgabe zugrunde, eine Abwiegevorrichtung der eingangs beschriebenen, aus der DE-B-1 780 045 bekannten Art zum Einsatz an Fahrzeugen mit Gummifedern derart weiterzubilden, dass sie mit einem Minimum an Bauteilen auskommt und deshalb nicht nur preisgünstig herstellbar und funktionssicher ist, sondern auch einen geringen Raumbedarf benötigt, so dass sie sich insbesondere für mit kleinen Raddurchmessern ausgeführte Drehgestelle von Schienenfahrzeugen eignet.

Die Lösung dieser Aufgabenstellung durch die Erfindung ist dadurch gekennzeichnet, dass das Federungsteil als Gummifederung des Fahrzeugs ausgebildet ist und die Druckplatte als Auflager für die Gummifederung ausgebildet ist, und dass die stirnseitige Wirkfläche des Stössels unmittelbar am Federungsteil anliegt.

Mit diesem Vorschlag der Erfindung wird das Wiegeventil auf den druckmittelbetätigten, d.h. pneumatischen oder auch hydraulischen Teil der Betätigung des im Bremskreis liegenden Druckregelventils beschränkt, da dessen bisheriger mechanischer Teil dadurch ersetzt wird, dass der Druckstössel des druckmittelbetätigten Teiles unmittelbar an einem gummi-elastischen Federelement der Federung abgestützt wird, welches somit den mechanischen Teil des Wiegenventils bekannter Bauart ersetzt. Das als Gummifeder ausgebildete Federungsteil liegt unmittelbar an der als Auflager ausgebildeten Druckplatte an, an der auch das Wiegeventil unmittelbar befestigt ist, dessen Stössel die Druckplatte verschieblich durchgreift. Hierdurch ergibt sich nicht nur eine konstruktive Vereinfachung, sondern auch eine erhebliche Verringerung des Bauvolumens. Durch die unmittelbare Abstützung des Stössels am Federungsteil entfallen weiterhin bisher erforderliche Kraftumlenkungen, welche häufig das Vorhandensein spezieller Laufwerkteile erforderlich machten, die unter bestimmten Umständen auch negative Auswirkungen auf die Kinematik der Laufwerke zur Folge hatten. Die auf den druckmittelbetätigten Teil des Wiegeventils wirkenden Kräfte können auf einfache Weise durch eine geeignete Wahl des Stösseldurchmessers festgelegt und derart gering ausgelegt werden, dass ein Verschleiss praktisch entfällt.

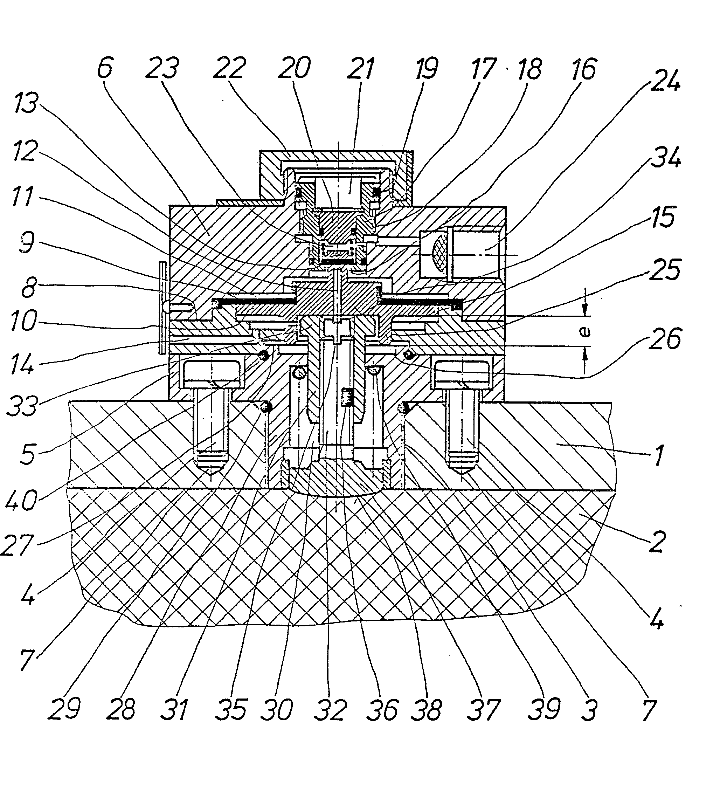

Auf der Zeichnung ist ein Ausführungsbeispiel einer nach der Erfindung ausgebildeten Abwiegevorrichtung im Schnitt dargestellt.

Von einer Gummifederung eines Fahrzeuges ist ein kleiner Ausschnitt, umfassend einen kurzen Abschnitt einer starren Wandung 1 und einen kleinen Teil eines Federungsteiles 2 aus elastischem Werkstoff, dargestellt. Das an die Wandung 1 angrenzende und an dieser anliegende Federungsteil 2 kann beispielsweise Teil eines ringwulstartigen Gummikörpers und die starre Wandung 1 ein Ausschnitt aus dem oberen Gehäuse- bzw. Glockenteil einer Gummifederung mitsamt deren Kunststoffauskleidung sein. Wesentlich ist, dass der dargestellte Abschnitt der starren Wandung 1 sich in einem Bereich befindet, an welchem in jedem Lastzustand des Fahrzeuges das Federungsteil 2 anliegt. Die Wandung 1 ist mit einer Durchbrechung 3 versehen. Auf der dem Federungsteil 2 abgewandten Seite ist auf die Wandung 1 im Bereich der Durchbrechung 3 mittels Schrauben 4 ein aus wenigstens zwei Gehäuseteilen 5 und 6 zusammengesetztes Ventilgehäuse aufgeschraubt. Die Schrauben sind beim Ausführungsbeispiel in Gewindesacklöcher 7 eingeschraubt.

Das Gehäuseteil 6 beinhaltet einen Membrankolben, bestehend aus einer an ihrem Aussenumfang an einer Gehäuseteilung 8 eingespannten Membran 9, welche auf ihrer der Wandung 1 zugewandten Seite auf einem im Gehäuseteil 6 verschieblich gelagerten Tellerteil 10 aufliegt und mit ihrer anderen Seite einen Beaufschlagungsraum 11 begrenzt. Das Tellerteil 10 durchsetzt die Membran 9 und endet im Beaufschlagungsraum 11 mit einem eine Entlüftungsbohrung 12 umgebenden Ventilsitz vor einer federbelasteten Doppelventildichtung 13. Die Entlüftungsbohrung 12 durchsetzt axial das Tellerteil 10 und mündet in einen unter diesem befindlichen, ständig über eine Gehäuseöffnung 14 mit der Atmosphäre in Verbindung stehenden Raum 15. Der Doppelventildichtung 13 ist ein zweiter Ventilsitz 16 zugeordnet, der sich an einer die Doppelventildichtung 13 übergreifenden Einstellhülse 17 befindet, die über ein Gewinde 18 axial einstellbar und vermittels eines Dichtringes 19 abgedichtet mit dem Gehäuseteil 6 verschraubt ist. Das obere Ende der Einstellhülse 17 ist mittels eines Stopfens 20 dicht verschlossen.

Der die Einstellhülse 17 aufnehmende Raum 21 ist nach aussen durch einen mit dem Ventilgehäuseteil 6 dicht verbundenen Deckel 22 abgedeckt. Die Doppelventildichtung 13 bildet zusammen mit dem Ventilsitz 16 der Einstellhülse 17 ein Einlassventil 13, 16 vom die Doppelventildichtung 13 aufnehmenden Innenraum 23 der Einstellhülse 17 zum Beaufschlagungsraum 11. Zusammen mit dem am Tellerteil 10 vorgesehenen, die Entlüftungsbohrung 12 umgebenden Ventilsitz bildet die Doppelventildichtung 13 ein Auslassventil 10, 13 vom Beaufschlagungsraum 11 zur Atmosphäre. Der Innenraum 23 ist über einen Rohranschluss 24 ständig mit einer Druckmittelquelle, vorzugsweise einer Druckluftquelle verbunden. Der im Beaufschlagungsraum 11 herrschende Druck ist über einen nicht dargestellten Rohranschluss ableitbar und beispielsweise einer lastabhängigen Bremssteuerung des Fahrzeuges zuführbar.

Auf der Wandung 1 und damit dem Gehäuseteil 5 zugewandten Seite weist das Gehäuseteil 6 eine in den Raum 15 mündende Öffnung 25 auf, welche von einem ringförmigen Ansatz 26 des Tellerteiles 10 durchgriffen ist. Der Ansatz 26 ist an der Wandung der Öffnung 25 mit gewissem Spiel verschieblich geführt. Er schliesst den Raum 15 bei abgenommenen Gehäuseteil 5 gegen das Eindringen grober Verschmutzungen geschützt ab. Weiterhin weist das Gehäuseteil 6 einen die Öffnung 25 umgebende Zentrierabsatz auf, in welchen ein ringförmiger Zentrieransatz 27 des Gehäuseteiles 5 eingreift.

Das Gehäuseteil 5 besteht im wesentlichen aus einem plattenartigen Abschnitt, welcher einerseits auf der Wandung 1 aufliegt und mittels der Schrauben 4 an dieser gehalten ist und auf welchem andererseits das Gehäuseteil 6 aufsitzt. Etwa mittig trägt das Gehäuseteil 5 auf seiner der Wandung 1 zugewandten Seite einen Ringansatz 28, dessen Länge etwa der Stärke der Wandung 1 entspricht und welcher unter Zwischenlage eines Dichtringes 29 in die Durchbrechung 3 eingreift und diese wenigstens annähernd durchragt. Der Ringansatz 28 umschliesst eine Öffnung 30 im Gehäuseteil 5, in welcher ein aus zwei Stösselteilen 31 und 32 zusammengesetzer Stössel etwa rechtwinklig zur Wandung 1 verschieblich gelagert ist.

Das dem Gehäuseteil 5 zugewandte Stösselteil 31 ist hülsenförmig mit einem Innengewinde ausgebildet. An seinem der Wandung 1 abgewandten Ende ist es mit einem Kopfteil 33 versehen, mit welchem es in den vom Ansatz 26 umschlossenen Raum eingreift und am Tellerteil 10 anliegt. Der Kopfteil 33 ist an seinem Aussenumfang in aus der Zeichnung nicht ersichtlicher Weise mit Schlüsselflächen zum Ansetzen eines Schraubenschlüssels versehen. Zwischen dem am Tellerteil 10 anliegenden Stösselende 34 und der dem Gehäuseteil 5 zugewandten Stirnfläche des Zentrieransatzes 27 als Bezugsfläche ist eine Toleranzmasse vorgesehen.

Der andere Stösselteil 32 weist einen bolzenartigen Abschnitt auf, mit welchem er in das Stösselteil 31 justierbar eingeschraubt ist. An seinem dem Gehäuseteil 5 zugewandten Ende ist der Stösselteil 32 mit einem Schlitz 35 zum Ansetzen eines Schraubenziehers versehen. Beide Stösselteile 31 und 32 tragen also an ihren dem Tellerteil 10 zugewandten Enden Profilflächen zum Ansetzen von Drehwerkzeugen, wodurch sie bei abgenommenen Gehäuseteil 5 einfach und genau gegeneinander verschraubbar sind. Um ungewollte Relativverstellung zwischen den beiden Stösselteilen 31 und 32 auszuschliessen, befindet sich in deren ge-genseitigem Verschraubungsabschnitt ein Reib-glied 36, welches beide mit einer gewissen Reibkraft miteinander verbunden hält.

Das Stösselteil 32 endet in Richtung auf das Federungsteil 2 mit einem Kopfabschnitt 37, der mit einer leicht balligen Wirkfläche 38 auf der Oberfläche des Federungsteiles 2 aufsteht. Der Aussenumfang des Kopfabschnittes 37 ist am Innenzylinder des Ringansatzes 28 verschieblich geführt. Eine in der Öffnung 30 befindliche Feder 39 drückt den Kopfabschnitt 37 gegen das Federungsteil 2. Die Feder 39 ist zwischen das Gehäuseteil 5 und den Kopfabschnitt 37 mit Vorspannung einge-setzt.

Die beiden Gehäuseteile 5 und 6 des Ventilgehäuses sind durch nicht dargestellte, leicht zugängliche Verschraubungen unter Zwischenlage eines das Eindringen von Verschmutzungen ausschliessenden Dichtringes 40 miteinander fest verbunden.

Die Fläche der Wirkfläche 38 ist wesentlich kleiner als die wirksame Fläche der Membran 9, welche etwa der als Kolbenfläche anzusehenden Oberfläche des Tellerteiles 10 entspricht.

Wenn das mit der Abwiegevorrichtung ausgestattete Fahrzeug leer ist, befindet sich die Abwiegevorrichtung in dem aus der Zeichnung ersichtlichen Ruhezustand. Der Federungsteil 2 steht dabei aufgrund des Leergewichts des Fahrzeugs un-ter einer relativ niedrigen Spannung, und die Feder 39 drückt die ballige Wirkfläche 38 des Kopfabschnittes 37 geringfügig in die Oberfläche des Federungsteiles 2 derart ein, dass zwischen beiden eine gute Anlage gewährleistet ist. Die Länge des Stössels 31, 32 ist derart justiert, dass das Tellerteil 10 bei Auflage auf dem Stösselende 34 sowohl das Einlassventil 13, 16 wie das Auslassventil 10, 13 geschlossen hält. Im Beaufschlagungsraum 11 herrscht einniedriger Druck, der proportional dem Leergewicht des Fahrzeuges ist, die Andrückung der Wirkfläche 38 an das Federungsteil 2 unterstützt und der die nicht dargestellte Fahrzeug-bremsanlage auf « leeres Fahrzeug » einstellt. Auch die Einstellhülse 17 befindet sich dabei in einer bestimmten Lage entsprechend dem geschlossenen Einlassventil 13, 16 und Auslassventil 10, 13.

Wird das Fahrzeug beladen, so steigt die innere Spannung im Federungsteil 2 in einer der Bela-stungszunahme entsprechenden Weise an, wo-durch der Federungsteil 2 unter Zurückdrücken des Kopfabschnittes 37 sich etwas zur Öffnung 30 hin ausstülpt und dabei geringfügig in den vom Ringansatz 28 umschlossenen Raum eindringt. Der Stössel 31, 32 wird also unter Mitnahme des Tellerteiles 10 nach oben verdrängt, wobei das Einlassventil 13, 16 geöffnet wird und Druckluft aus dem Rohranschluss 24 sowie dem Innenraum 23 in den Beaufschlagungsraum 11 einströmt und in diesem eine Drucksteigerung bewirkt. Über die Membran 9 wird somit das Tellerteil 10 verstärkt durch Druckmittelbeaufschlagung nach unten belastet. Bei Erreichen einer bestimmten Beaufschlagungshöhe drückt es daher den Stössel 31, 32 unter Schliessen des Einlassventils 13, 16 in die aus der Zeichnung ersichtliche Lage zurück, wobei das Federungsteil 2 entgegen seiner erhöhten, inneren Spannung in seine Ausgangslage zurückgedrückt ist. Im Beaufschlagungsraum 11 herrscht dann bei geschlossenem Einlass- und Auslassventil 13, 16 und 10, 13 ein der gesteigerten Fahrzeugbelastung entsprechend gesteigerter Druck, welcher die bereits erwähnte Fahrzeugbremse auf entsprechend verstärkte Bremswerte einstellt. Bei weite-ren Belastungssteigerungen des Fahrzeuges wie-derholen sich unter jeweils entsprechender Stei-gerung des Beaufschlagungsdruckes im Beauf-schlagungsraum 11 die vorstehend geschilderten Vorgänge.

Wird das Fahrzeug entlastet, so drücken die vereinten Kräfte von Druckmittelbeaufschlagung des Tellerteiles 10 und der Feder 39 den Kopfabschnitt 37 verstärkt in den in seiner inneren Spannung absinkenden Federungsteil 2 hinein, d.h. der Stössel 31, 32 mit dem Tellerteil 10 geht nach unten, wobei das Auslassventil 10, 13 geöffnet wird und Druckluft aus dem Beaufschlagungsraum 11 durch die Enlüftungsbohrung 12 und die Gehäuseöffnung 14 zur Atmosphäre abströmt. Damit sinkt der Beaufschlagungsdruck im Beaufschlagungsraum 11. Die vom Kopfabschnitt 37 auf den Federungsteil 2 ausgeübte Druckkraft sinkt entsprechend, und bei Erreichen eines dem neuen Spannungszustand im Federungsteil 2 entsprechenden Kräftegleichgewichtes wird von der inneren Spannung des Federteiles 2 der Stössel 31, 32 mit dem Tellerteil 10 unter Schliessen des Auslassventils 10, 13 wieder in die dargestellte Lage angehoben. Im Beaufschlagungsraum 11 herrscht dann ein verringerter, dem verringerten Belastungszustand des Fahrzeuges entsprechender Druck. Bei weiterer Entlastung des Fahrzeuges wiederholen sich diese Vorgänge, bis wieder der Leerzustand des Fahrzeuges und der diesem Leer-zustand entsprechende Druck im Beaufschla-gungsraum 11 erreicht sind.

Bei den Belastungsänderungen des Fahrzeuges etwaig auftretende Abwälzvorgänge des Federungsteiles 2 an der starren Wandung 1 beeinflussen die vorstehend geschilderten Vorgänge praktisch nicht; wesentlich ist lediglich, dass wenigstens im näheren Umkeis um die Durchbrechung 3 der Federungsteil 2 ständig an der Wandung 1 anliegt.

Bei der Montage der Abwiegevorrichtung wird zuerst das Gehäuseteil 5 mit dem Stössel 31, 32 auf der starren Wandung 1 mittels der Schrauben 4 montiert. Sodann werden vorzugsweise mittels einer Lehre die beiden Stösselteile 31, 32 mittels Drehwerkzeugen derart gegeneinander verschraubt, dass das Toleranzmasse einem bestimmten, vorgeschriebenen Wert entspricht. Sodann wird das Gehäuseteil 6 mit dem in ihm enthaltenden Tellerteil 10 und den Ventileinrichtungen auf das Gehäuseteil 5 aufgesetzt und mit diesem verbunden. Erforderlichenfalls kann anschliessend nach Abnahme des Deckels 22 die Einstellhülse 17 derart justiert werden, dass unter bestimmter Fahrzeugbelastung und bestimmter Druckhöhe im Beaufschlagungsraum 11 das Einlassventil 13, 16 und das Auslassventil 10, 13 geschlossen sind.

Durch die Längenjustierung des Stössels 31, 32 sind Massabweichungen der starren Wandung 1 sowie der Stärke des Gehäuseteiles 5 ausgleichbar. Durch Justieren der Einstellhülse 17 kann der einer bestimmten Fahrzeugbelastung zuzuordnende Druck im Beaufschlagungsraum 11, also die Charakteristik der Abwiegevorrichtung, den jeweiligen Erfordernissen angepasst werden. Ein Hineinschrauben der Einstellhülse 17 in das Gehäuseteil 6 entspricht dabei einer Drucksteigerung im Beaufschlagungsraum 11 bei konstant bleibender Fahrzeugbelastung und umgekehrt.

Die Abwiegevorrichtung ist nicht nur bei Gummifederungen der eingangs beschriebenen Art, sondern auch bei andersartig ausgestalteten, beispielsweise silentblockartigen Gummifederungen verwendbar.

Die Vorspannung der Feder 39 bestimmt mit die Kennlinienlage des Wiegeventils, d.h. die bei einer bestimmten Fahrzeugbelastung im Beaufschlagungsraum 11 herrschende Druckhöhe. Da jedoch gewisse Toleranzabweichungen der Feder 39 durch die vorstehend erläuterten Justierungen ausgleichbar sind, können die Toleranzwerte der Feder relativ gross gewählt werden. Es ist jedoch auch möglich, die Feder 39 in ihrer Vorspannung einstellbar, beispielsweise durch ein einstellbares Widerlager am Gehäuseteil 5 einzuspannen, wodurch eine weitere Justiermöglichkeit für die Charakteristik der Abwiegevorrichtung gegeben wird.

### Bezugszeichenliste

| | | | |
|---|---|---|---|
| 1 | starre Wandung | 19 | Dichtring |
| 2 | Federungsteil | 20 | Stopfen |
| 3 | Durchbrechung | 21 | Raum |
| 4 | Schraube | 22 | Deckel |
| 5 | Gehäuseteil | 23 | Innenraum |
| 6 | Gehäuseteil | 24 | Rohranschluss |
| 7 | Gewindesackloch | 25 | Öffnung |
| | | 26 | Ansatz |
| 8 | Gehäuseteilung | 27 | Zentrieransatz |
| 9 | Membran | 28 | Ringansatz |
| 10 | Tellerteil | 29 | Dichtring |
| 11 | Beaufschlagungsraum | 30 | Öffnung |
| | | 31 | Stösselteil |
| 12 | Entlüftungsbohrung | 32 | Stösselteil |
| | | 33 | Kopfteil |
| 13 | Doppelventildichtung | 34 | Stösselende |
| | | 35 | Schlitz |
| 14 | Gehäuseöffnung | 36 | Reibglied |
| 15 | Raum | 37 | Kopfabschnitt |
| 16 | Ventilsitz | 38 | Wirkfläche |
| 17 | Einstellhülse | 39 | Feder |
| 18 | Gewinde | 40 | Dichtring |

## Patentanspruch

Abwiegevorrichtung zur lastabhängigen Regelung der Bremskraft von Fahrzeugen, insbesondere Schienenfahrzeugen, die mit der Federung des Fahrzeugs in Wirkverbindung steht, die weiterhin ein sich an einer starren mit dem abzufedernden Fahrzeugteil befestigten Druckplatte (1) des abzufedernden Fahrzeugteils abstützendes, elastisch verformbares Federungsteil (2) aufweist, wobei die abzuwiegende Last zum überwiegenden Teil über die Druckplatte (1) unmittelbar auf das Federungsteil (2) und zu einem geringen Teil mittelbar über ein Wiegeventil übertragen wird, das ebenfalls am abzufedernden Fahrzeugteil bzw. an der Druckplatte befestigt ist und einen Stössel (31, 32) aufweist, der die Druckplatte verschieblich durchgreift und der auf seiner stirnseitigen Wirkfläche (38) mit einer der abzuwiegenden Last in etwa proportionalen Kraft belastet wird, dadurch gekennzeichnet, dass das Federungsteil (2) als Gummifederung des Fahrzeugs ausgebildet ist und die Druckplatte (1) als Auflager für die Gummifederung ausgebildet ist, und dass die stirnseitige Wirkfläche (38) des Stössels (31, 32) unmittelbar am Federungsteil (2) anliegt.

## Claim

Weigth-sensing apparatus for load-dependent regulation of the braking force of vehicles, particularly railway vehicles, which apparatus is operatively connected with the springing of the vehicle, which apparatus further has a resiliently deformable spring part (2) supporting the vehicle part to be sprung through a rigid pressure plate (1) fixed to the vehicle part to be sprung, the load to be weight-sensed being transmitted to the upper weighing part through the pressure plate (1) directly onto the spring part (2) and to a limited extend indirectly through a weighing valve, which is also secured to the vehicle part to be sprung or to the pressure plate and has a ram (31, 32), which displaceably extends through the pressure plate and which is loaded on its front-facing work surface (38) with a force substantially proportional to the load to be weight-sensed, characterised in that, the spring part (2) is constructed as rubber springing of the vehicle and the pressure plate (1) is constructed as a bearing for the rubber springing, and in that the front-facing work surface (38) of the ram (31, 32) fits directly on the spring part (2).

## Revendication

Dispositif de pesée pour la régulation en fonction de la charge de la force de freinage de véhicules, en particulier de véhicules ferroviaires, du type se trouvant en relation de fonctionnement avec la suspension du véhicule, laquelle possède un élément de suspension (2) déformable élastiquement reposant sur une plaque d'appui (1) de l'élément inférieur du véhicule suspendu fixée rigidement audit élément du véhicule suspendu et du type dans lequel la charge de pesée est transmise pour la plus grande part par l'intermédiaire de la plaque d'appui (1) directement à l'élément de suspension (2) et pour une petite part par l'intermédiaire d'une soupape de pesée, laquelle est fixée à la fois sur l'élément inférieur du véhicule suspendu et la plaque d'appui, et présente un poussoir (31, 32), qui traverse avec possibilité de basculement la plaque d'appui en étant soumise par sa surface frontale de fonctionnement (38) à une charge de pesée environ proportionnelle, caractérisé en ce que l'élément de suspension (2) est réalisé sous forme de suspension en caoutchouc du véhicule, et la plaque d'appui (1) est conformée comme support pour la suspension en caoutchouc, et en ce que la surface frontale de fonctionnement (38) du poussoir (31, 32) repose directement sur l'élément de suspension (2).